# EUROPÄISCHE PATENTSCHRIFT

(11) **EP 1 537 521 B1**
(45) Veröffentlichungstag und Bekanntmachung des Hinweises auf die Patenterteilung: **07.06.2006**
(21) Anmeldenummer: 03747991.2
(22) Anmeldetag: 09.09.2003
(51) Int. Cl.: G06K 9/46, G06F 17/17, G06T 7/60, G01B 21/04

(54) **VERFAHREN ZUR MINIMIERUNG DES EINFLUSSES VON STÖRSIGNALEN BEI DER FORMELEMENTEBERECHNUNG AUS KOORDINATENPUNKTEN**
METHOD FOR MINIMIZING THE INFLUENCE OF INTERFERING SIGNALS DURING CALCULATION OF SHAPED ELEMENTS FROM COORDINATE POINTS
PROCEDE POUR MINIMISER L'INFLUENCE DE SIGNAUX PARASITES LORS DU CALCUL D'ELEMENT MOULE A PARTIR DE POINTS DE COORDONNEES

(30) Priorität: 14.09.2002 DE 10242852
(43) Veröffentlichungstag der Anmeldung: 08.06.2005
(73) Patentinhaber: Trimble Jena GmbH, 07745 Jena (DE)
(72) Erfinder: USBECK, Christian, 98554 Benshausen (DE); BRUECKNER, Peter, 98527 Suhl (DE); KUEHN, Olaf, 98528 Suhl (DE); LINSS, Gerhard, 98529 Suhl (DE)
(74) Vertreter: Diehl & Partner
(86) Internationale Anmeldenummer: PCT/EP2003/009996
(87) Internationale Veröffentlichungsnummer: WO 2004/027697

(56) Entgegenhaltungen:
- DE-A- 19 900 737
- DE-C- 10 055 572
- BRAILOVSKY V L: "An approach to form recognition based on non-linear projections, search and optimization" PATTERN RECOGNITION LETTERS, NORTH-HOLLAND PUBL. AMSTERDAM, NL, Bd. 18, Nr. 11-13, 1. November 1997 (1997-11-01), Seiten 1099-1107, XP004117907 ISSN: 0167-8655

## Beschreibung

Die Erfindung betrifft ein Verfahren zur Filterung von Koordinatenpunkten bei der Berechnung von Formelementen mit dem Ziel, Koordinaten von der Formelementeberechnung auszuschlie-ßen, die lokal nicht zur erwarteten idealen geometrischen Form zuzuordnen sind.

Ein bekanntes Problem der Koordinatenmesstechnik ist die Berechnung der Gestalt des Messobjektes aus einer Menge von Koordinatenpunkten der Messobjektoberfläche, die durch Antastung gewonnen werden. Die Beschreibung' der Gestalt erfolgt durch idealgeometrische Ersatzelemente (kurz: Formelement), wie beispielsweise Gerade, Kreis, Ellipse, Kugel, Zylinder. Die Koordinatenpunkte liegen zum Teil ungeordnet vor und weichen, bedingt durch Störeinflüsse, von der realen Geometrie des Prüflings ab. Insbesondere bei der optischen Gewinnung der Koordinatenpunkte mit Hilfe von Bildsensoren können erhebliche Abweichungen von der realen Gestalt auftreten. Ursache dafür sind beispielsweise instabile Lichtverhältnisse, Verschmutzung durch Staubablagerungen an den Objektkanten oder auch texturierte Oberflächen und Bildhintergründe. Werden die Koordinatenpunkte ungefiltert einer Ausgleichsrechnung für die Bestimmung eines Formelements zugeführt, so kann dies zu erheblichen Messabweichungen führen.

Im Stand der Technik sind Verfahren zum Ausfiltern von Störungen in den Messsignalen bekannt, die auf der Glättung der Messwerte beruhen. Beispiele sind die Glättung durch gleitende Mittelwertbildung, die Glättung durch Tiefpassfilterung, optimale Filterung (Wiener-Filter). Nachteilig ist, dass bei all diesen Verfahren der Einfluss der so genannten Ausreißer, also der weit von den tatsächlichen Werten entfernten Messwerte, durch Mittelung zwar minimiert wird, aber dennoch das Messergebnis beeinträchtigt.

Eine Verbesserung der Genauigkeit der Messergebnisse wird erzielt, wenn die Eingangsmesswerte (vornehmlich Antastpunktkoordinaten) vor der weiteren messtechnischen Auswertung von potenziellen Ausreißern getrennt werden und lediglich die ausreißerbereinigten Messwerte weiter verarbeitet werden. In der DE 199 00 737 A1 wird dazu vorgeschlagen, nach einer ersten Ausgleichsrechnung, mittels folgender Hochpassfilterung, die als Störung anzusehenden Antastpunktkoordinaten zu eliminieren. Nachteilig bei dieser Verfahrensweise ist, dass sich die Störungsfilterung auf ein zuvor berechnetes Formelement bezieht, welches bereits durch die Störungen in den Eingangsmesswerten beeinflusst ist. Dabei können zum Teil erhebliche Abweichungen in der Lage und Orientierung des Formelementes auftreten, so dass der nachfolgende Filtervorgang nicht die tatsächlichen Störungen ausfiltern kann.

Prinzipiell handelt es sich bei der Ausgleichsrechnung um Verfahren zur Einpassung eines geometrischen Primitives (Formelement) in eine ungeordnete Menge von Eingangskoordinatenpunkten Pᵢ (xᵢ, yᵢ) mit dem Ziel, dass das die Summe der Abweichungen der Punkte Pᵢ(xᵢ,yᵢ) bezogen auf das Formelement minimal wird. Als Abweichungsmaß sind bekannt, der Betrag der Abstände, das Quadrat der Abstände und der Betrag des Abstandes von maximaler positiver Abweichung zu maximaler negativer Abweichung bezogen auf das Formelement. Bei Ausgleichrechnungen wird nicht geprüft, ob das Ergebnisformelement die Messpunktwolke bestmöglich repräsentiert. Wenn die Menge der Eingangskoordinatenpunkte Pᵢ(xᵢ, yᵢ) für das Formelement repräsentativ ist, so erfolgt die Charakterisierung des Formelementes mit einer höheren Präzision als bei den nachfolgend noch beschriebenen Erkennungsverfahren.

Außer bei der koordinatenmesstechnischen Auswertung spielt die Eliminierung von Störstrukturen auch bei Problemen der technischen Erkennung eine wesentliche Rolle. Um die Aussagesicherheit bei der Hinderniserkennung tief fliegender Fluggeräte zu erhöhen, wird in der DE 100 55 572 C1 vorgeschlagen, Überlandleitungen in Entfernungsbildern mit Hilfe eines Erkennungsverfahrens für horizontale Geraden, nämlich der dem Fachmann bekannten Hough-Transformation, zu erkennen. Allerdings ist mit dieser Verfahrensweise die Ableitung von genauen Angaben zur Lage und Orientierung des Formelementes nur mit erheblichem rechentechnischem Aufwand erzielbar. Für Aufgabenstellungen der Präzisionsmesstechnik sind Verfahren der Ausgleichsrechnung von Formelementen wesentlich wirtschaftlicher einsetzbar.

In der DE 695 23 965 T2 werden eine Erkennungsvorrichtung und ein entsprechendes Verfahren für einen zweidimensionalen Code beschrieben. Dabei wird eine Ausgleichsrechnung mit allen ermittelten Bildpunkten ausgeführt. Weiterhin wird eine Hough-Transformation zur Erkennung von Geraden ausgeführt, wobei die Anzahl der zu berücksichtigenden Punkte vor Ausführung der Transformation reduziert wird, um den Rechenaufwand zu verringern. _

Generell versteht man unter der Erkennung von Formelementen das Feststellen, ob ein gesuchtes Formelement im vorgegebenen ebenen oder räumlichen Untersuchungsbereich vorkommt (Identifizierung). Bei der Identifizierung wird auf bestmögliche Übereinstimmung zwischen Formelement und Anordnung von Eingangskoordinatenpunkten Pᵢ(xᵢ,yᵢ) (Messpunktwolke) geprüft. Mit der Identifizierung erfolgt auch die nähere Charakterisierung des gefundenen Formelementes anhand von charakteristischen Parametern (Lage, Größe, Orientierung). Die Bestimmung von Lage, Größe und Orientierung kann bei Erkennungsverfahren auf Grund des hohen Rechenaufwandes nur in grober Weise erfolgen.

Die Hough-Transformation ist ein Werkzeug zur Erkennung von geometrischen Primitiven wie bespielsweise Geraden, Kreise in einer ungeordneten Menge von Eingangskoordinatenpunkten Pi(xi,yi). Im Gegensatz zur Einpassung von geometrischen Primitiven mit den Methoden der Ausgleichsrechnung werden bei der Hough-Transformation keine Abweichungsmaße sondern ein Häufigkeitsmaß verwendet. Das Kriterium zur Erkennung des geometrischen Primitivs lautet: Die maximale Anzahl von Eingangskoordinaten liegen auf dem geometrischen Primitiv. Deshalb ist die Hough-Transformation sehr robust gegen Störungen mit geringer Auftrittswahrscheinlichkeit, wie beispielsweise Ausreißer, Konturunterbrechungen oder Überdeckungen der zu suchenden Struktur.

Die oben bereits erwähnte Hough-Transformation stellt ein solches Erkennungsverfahren dar und wurde zum Auffinden von geradlinigen Strukturen in einem karthesischen Koordinatenraum entwickelt. Eine grundlegende Erläuterung findet sich beispielsweise in der US 3,069,654. Die Möglichkeiten des Einsatzes der Hough-Transformation sind auch in Haberäcker, P.: "Praxis der digitalen Bildverarbeitung und Mustererkennung", München: Hanser, 1995 beschrieben.

Der Erfindung liegt somit die Aufgabe zu Grunde, ein Verfahren der eingangs genannten Art anzugeben, bei dem die Lage und Orientierung der gewünschten Formelementeart in stark streuenden Eingangskoordinatenpunkten bestimmt werden kann und die Vorteile der geringen Messunsicherheit der Formelemente-Ausgleichsrechnung erhalten bleiben.

Erfindungsgemäß gelingt die Lösung der Aufgabe durch die im angefügten Patentanspruch 1 angegebenen Merkmale.

Das erfindungsgemäße Verfahren beruht auf einer neuartigen Kombination von gegen Messfehler robusten Erkennungsverfahren und der genaueren Formelementeausgleichsrechnung für die jeweils gleiche gewünschte Formelementeart. Entscheidend ist dabei, dass alle relevanten Messergebnisse einem Erkennungsverfahren für ein in der Regel vorgegebenes Formelement zugeführt werden. Nach Erkennung des Formelements können die außerhalb eines vorgegebenen Wertebereichs liegenden Messwerte als Ausreißer ausgeschlossen werden. Die nachfolgend auf die verbleibenden Messwerte angewendet Ausgleichsrechnung führt zu einer wesentlich exakteren Bestimmung des Formelements, da die Ausreißer das Ergebnis der Formelementebestimmung in diesem Verfahrensschritt nicht mehr verfälschen.

Obwohl in der nachfolgenden Beschreibung des Verfahrens weitgehend auf das Beispiel von optisch erfassten Messwerten Bezug genommen wird, ist festzuhalten, dass generell auf beliebige Weise erfasste Messdaten für die Anwendung des Verfahrens geeignet sind. Die optische Messdatenerfassung steht im Vordergrund, weil die dort auftretenden verunreinigungs- und beleuchtungsbedingten Abweichungen gegenüber der tatsächlichen Struktur besonders gravierend sein können.

Vorzugsweise wird als vorgeschaltetes Erkennungsverfahren die Hough-Transformation eingesetzt. Es können aber auch andere Erkennungsverfahren verwendet werden, die hier nicht alle detailliert dargestellt werden müssen, da sie dem Fachmann als solche bekannt sind.

Eine gegenüber dem Stand der Technik erzielbare wesentliche Verbesserung der Störunterdrückung wird erzielt, indem die Art des gewünschten Formelementes bereits bei der Bewertung der Eingangskoordinatenpunkte auf Ausreißer Berücksichtigung findet, und nicht erst bei der sonst üblichen nachfolgenden Messwertverarbeitung (im nächsten Verarbeitungsschritt).

Ein Vorteil des erfindungsgemäßen Verfahrens besteht darin, dass sich die Ausreißeridentifikation auf die Gestalt des gewünschten Formelements bezieht. So kann selbst aus einer stark streuenden Punktewolke eine Erkennung der Lage und Orienteriung eines zu bestimmenden Formelementes erreicht werden. Dies ist insbesondere bei bildauswertenden Messverfahren notwending, wenn die zu erkennenden Strukturen durch unbekannte systematische Strukturen im Vordergrund oder Bildhintergrund gestört sind. Beispiele sind die Erkennung von geodätischen Merkmalen in Landschaftsbildern oder die Geometriebestimmung an durch Staub verunreinigten Körperkanten im Bild.

Der Einsatz von robusten Erkennungsverfahren für die Bestimmung der Lage und Orientierung des Formelementes gestattet eine sichere Filterung von Störstrukturen und liefert gleichzeitig eine störsignalunabhängige Startlösung für die nachfolgende Formelementeausgleichsrechnung.

Eine vorteilhafte Ausgestaltung zeichnet sich durch die Vorschaltung einer Formelementeausgleichsrechnung vor die als Erkennungsverfahren arbeitende Hough-Transformation aus. Durch Bildung eines Güteparameters (E) aus dem Ergebnis der Formelementeausgleichsrechnung und Prüfung, ob dieser Parameter (E) in einem vorgebbaren Toleranzbereich (T) liegt, kann entschieden werden, ob die rechenintensive Hough-Transformation überhaupt benötigt wird.

Weitere vorteilhafte Ausgestaltungen des Verfahrens sind in den abhängigen Ansprüchen angegeben.

Die Erfindung wird nachstehend an einem Beispiel näher erläutert. Die zugehörigen Zeichnungen zeigen:
- Fig. 1 -: ein Diagramm mit zahlreichen Antastpunkten Pᵢ(x,y), die an einer durch Verunreinigung und Rauschen gestörten geradlinigen Objektkontur aufgenommen wurden;
- Fig. 2 -: ein Diagramm mit einer eingezeichneten Ausgleichsgerade durch alle Antastpunkte Pᵢ(x,y) mit Verunreinigung gemäß Fig. 1;
- Fig. 3 -: einen Ablaufplan der Verfahrensschritte zur Realisierung der Erfindung ohne vorgeschaltete Formelementeausgleichsrechnung;
- Fig. 4 -: eine Darstellung im Hough-Parameterraum am Beispiel der Formelementeart "Gerade";
- Fig. 5 -: ein Diagramm, in welchem am Beispiel des Formelements "Gerade" die Antastpunkte P₁ bis P₈, ein Formelement FE und ein Gültigkeitsparameter E eingezeichnet sind;
- Fig. 6 -: ein Diagramm mit einer verlagerten Ausgleichsgerade durch die verbleibenden Antastpunkte Prᵢ(x,y), die nach der Filterung der Verunreinigung zu berücksichtigen sind;
- Fig. 7 -: einen Ablaufplan einer abgewandelten Ausführungsform des Verfahrens gemäß Fig. 6, mit zusätzlich vorgeschalteter Formelementeausgleichsrechnung.

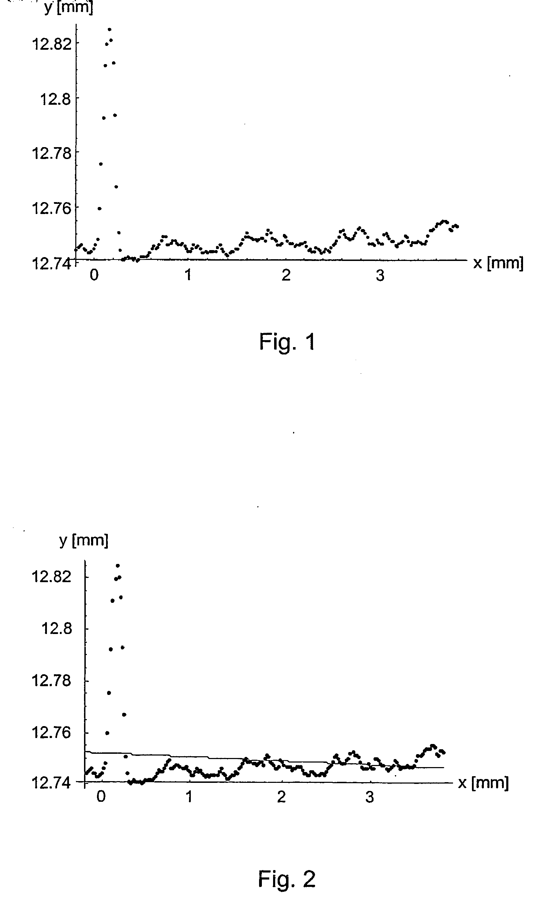

**Fig. 1** zeigt in einem Diagramm zahlreiche Antastpunkte Pᵢ(x,y), die bei der Vermessung eines Objektes (Proband) entlang einer geraden Kante gewonnen wurden. So wie eingangs gezeigt wurde, besteht insbesondere bei der optischen Präzisionsmessung oft ein Problem, wenn während der Messung eine Verschmutzung der Probanden vorliegt. Hierbei können schon kleinste Ablagerungen aus dem Produktionsprozess dazu führen, dass ein Proband aufgrund von Verschmutzung als Schlechtteil ausgesondert wird. In Fig. 1 ist der Einfluss einer solchen Verunreinigung deutlich durch Ausreißer unter den Antastpunkten zu erkennen, die im Bereich x = 0 bis 0,5 auftreten.

Für die Lösung dieses Problems wird durch die Erfindung eine Kombination von Erkennung und Ausgleichsrechnung für Formelemente angewendet.

In dem in **Fig. 2** gezeigten Diagramm ist eine Ausgleichsgerade eingezeichnet, die sich bei Ausführung einer Ausgleichsrechnung nach Gauss für das gewünschte Formelement ergibt, wenn die Punkte (Messdaten) der Ausgleichsrechnung ungefiltert zugeführt werden. Es ist aus Fig. 2 ersichtlich, dass die Ausreißer-Messwerte einen erheblichen Einfluss auf den Verlauf der Ausgleichgeraden haben, der vom erkennbaren positiven Anstieg in x-Richtung der eingezeichneten Punktewolke abweicht und einen negativen Anstieg zeigt.

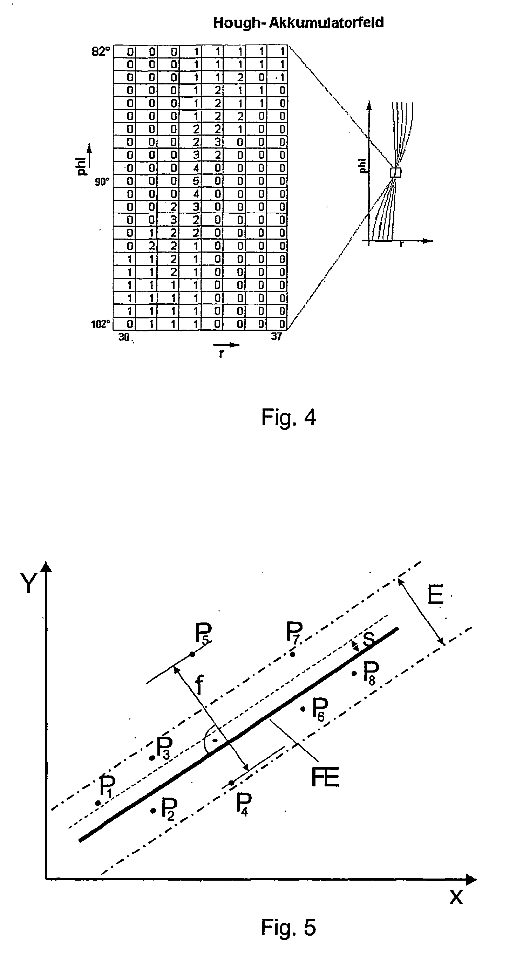

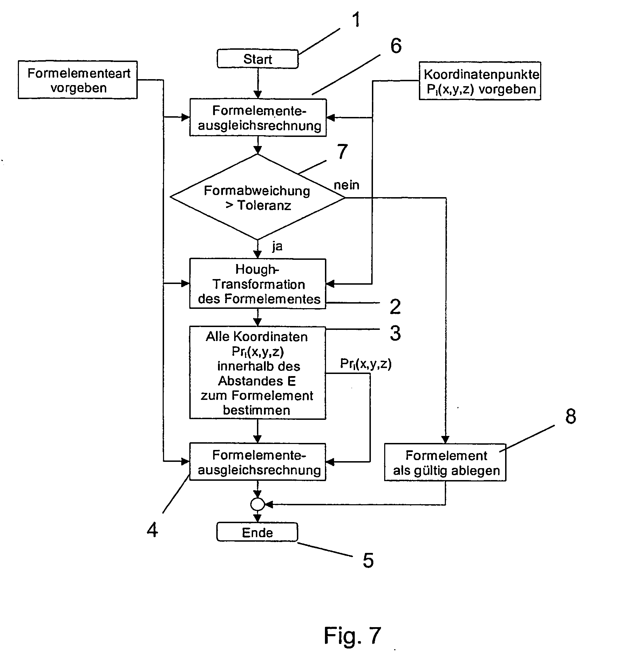

Zur Bewertung ob das berechnete Formelement gültig ist, wird ein Parameter E abgeleitet und dieser mit einem zulässigen vorgebbaren Toleranzbereich T verglichen. Der Parameter E kennzeichnet dabei beispielsweise einen Bereich um das gefundene Formelement in Form des euklidischen Abstandes (vgl. auch unten in Bezug auf Fig. 5). Der Parameter **E** kann beispielsweise durch die Formabweichung **f** oder die Standardabweichung **s** des berechneten Formelementes bestimmt werden. Weitere Bildungsvorschriften für E mit Hilfe der Ausgleichsrechnung sind natürlich ableitbar. Die Zuordnung einer geeigneten Bildungsvorschrift zur vorgegebenen Messaufgabe kann nach folgenden Bedingungen erfolgen:
- wenn alle Messpunkte innerhalb des Toleranzbereiches T liegen sollen, gilt: **E = f**
- wenn (unter der Annahme, dass die Eingangspunkte normalverteilt von dem berechneten Formelement abweichen) mindestens 99,73 % der Eingangspunkte innerhalb des Toleranzbereiches T liegen sollen, gilt: **E = 3 s**
- wenn (unter der Annahme, dass die Eingangspunkte normalverteilt von dem berechneten Formelement abweichen) mindestens 95 % der Eingangspunkte innerhalb des Toleranzbereiches T liegen sollen, gilt: **E = 2 s**

Sofern der Parameter E einen zulässigen vorgebbaren Toleranzbereich T überschreitet, kann das mit der Ausgleichsrechnung bestimmte Formelement nicht als gültig angesehen werden. An dieser Stelle setzt die Erfindung an, indem eine Filterung der gemessenen Koordinatenpunkte durchgeführt wird.

**Fig. 3** zeigt in einem Ablaufplan die wichtigsten Verfahrensschritte, die zur Realisierung der Erfindung ausgeführt werden müssen. Das Verfahren startet im Schritt 1. Um das Ergebnis der Formelementebestimmung zu verbessern, wird zunächst eine Formelementeerkennung ausgeführt. Dazu wird im Schritt 2 beispielsweise mittels Hough-Transformation als Erkennungsmethode die beste Lage des Formelements im Sinne des "häufigsten Auftretens" bestimmt. Zur Ausführung der Hough-Transformation werden sämtliche Koordinatenpunkte bzw. Antastpunkte Pᵢ herangezogen, soweit sie innerhalb eines vorbestimmbaren von der Lage des Formelements unabhängigen Gültigkeitsbereichs liegen. Natürlich ist es denkbar, einzelne Messwerte vor der Verarbeitung auszuschließen, wenn sie offensichtlich außerhalb des Gültigkeitsbereichs liegen. Die Antastpunkte Pᵢ sind durch ihre Koordinaten (x, y, z) bestimmt, wobei es sich je nach Messaufgabe um zwei- oder dreidimensionale Werte handeln kann.

Außerdem kann in den meisten Fällen die gesuchte Formelementeart durch die spezifische Messaufgabe vorgegeben werden. Dem Fachmann sind verschiedene Erkennungsverfahren bekannt, so dass deren Funktionsweise hier nicht näher beschrieben werden muss. **Fig. 4** zeigt zur Erläuterung eine Darstellung im Hough-Parameterraum am Beispiel der Formelementeart "Gerade".

Um das gefundene "Hough"-Formelement FE wird in Analogie zur oben genannten Verfahrensweise bei den "Ausgleichs"-Formelementen ein Bereich E abgeleitet, in welchem relevante Antastpunkte Prᵢ liegen müssen. **Fig. 5** zeigt diese Auswahl in graphischer Form als Diagramm, in welchem am Beispiel des Formelements "Gerade" die Antastpunkte P₁ bis P₈ eingezeichnet sind. Punkte außerhalb des Bereiches E werden dann aus dem Punktefeld eliminiert, wie dies beispielhaft für P₅ gezeichnet ist.

Zurückkommend auf Fig. 3 erfolgt die Auswahl der im Punktefeld verbleibenden relevanten Punkte im Schritt 3. In dem sich anschließenden Schritt 4 wird das verbleibende Punktefeld Prᵢ einer Ausgleichsrechnung zugeführt. Die Ausgleichsrechnung erfolgt somit unter Ausschluss der Ausreißer, die nach Ausführung der Erkennung außerhalb des Bereichs E angesiedelt sind, und führt damit zu präziseren Ergebnissen, als wenn die Ausgleichsrechung mit diesen Ausreißern durchgeführt worden wäre. Das Verfahren endet im Schritt 5.

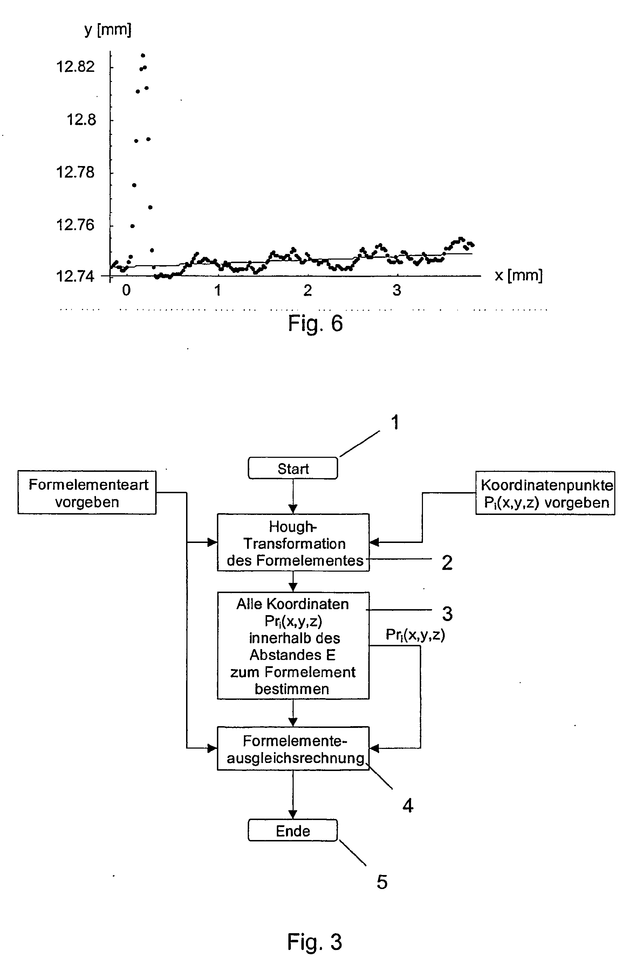

Fig. 6 zeigt in einem Diagramm die aus Fig. 1 bekannte Punktewolke und das gemäß dem beschriebenen Verfahren berechnete Ergebnis als verbessert Ausgleichsgerade. Weitere Iterationsschritte des Verfahrens sind möglich.

**Fig. 7** zeigt einen Ablaufplan einer abgewandelten Ausführungsform des Verfahrens. Der wesentliche Unterschied besteht darin, dass der Erkennung (Hough-Transformation) im Schritt 2 eine zusätzliche Formelementeausgleichsrechnung vorgeschaltet ist. Die vorgeschaltete Formelementeausgleichsrechnung erfolgt im Schritt 6 unter Berücksichtigung der Eingangskoordinatenpunkte Pᵢ. Die Bestimmung des gewünschten Formelementes im ersten Verarbeitungsschritt mittels Formelemente-Ausgleichsrechnung wirkt sich geschwindigkeitssteigernd aus, wenn keine Störungen in den Eingangspunkten vorhanden sind. Die nachfolgende zeitintensive Hough-Transformation wird nur dann aufgerufen, wenn bei der im Schritt 7 ausgeführten Prüfung der Gültigkeitsparameter E der Ausgleichsrechnung einen vordefinierbaren Toleranzbereich T überschreitet. Unterschreitet der Wert E den zulässigen vorgebbaren Toleranzbereich T, wird das Formelement im Schritt 8 sofort als gültig erklärt und als Messergebnis ausgegeben.

Für den Anwendungsfall, dass das gewünschte Formelement in den Eingangsdaten nicht lokalisierbar ist oder mehrere Formelemente gleicher Art vorhanden sind, ist die Hough-Transformation als erster Verarbeitungsschritt durchzuführen, wie es in Fig. 3 dargestellt ist. Ein Vorteil dieser Variante gegenüber der Variante in Fig. 7 besteht darin, dass die Erkennungsmethode nicht nur die Lage sondern auch die Art des am häufigsten vorkommenden Formelementes bestimmen kann. Außerdem können mit dem vorangestellten Erkennungsverfahren in einem Verarbeitungsschritt mehrere gleichartige Formelemente gefunden werden, die mit einer vorgebbaren Mindesthäufigkeit auftreten. Dadurch ist eine Segmentierung der Eingangskoordinaten und anschließende Ausgleichsrechnung in den verschiedenen Koordinatensegmenten durchführbar.

Bei der Ausführung des erfindungsgemäßen Verfahrens können als Formelementearten generell 2D- und 3D-Standardformelemente, räumliche Kurven als auch kombinierte Formelemente bestimmt werden.

## Patentansprüche

1. Verfahren zur Minimierung des Einflusses von Störsignalen bei der Formelementeberechnung aus Eingangskoordinatenpunkten Pᵢ die folgenden Schritte umfassend:
- Ausführung eines Erkennungsverfahrens (2) mit allen Eingangskoordinatenpunkten Pᵢ zur Berechnung eines erkannten Formelementes FE;
- Ausfiltern (3) relevanter Koordinatenpunkte Prᵢ aus den Eingangskoordinatenpunkten Pᵢ, die innerhalb eines vorgebbaren Parameters E um das im Erkennungsverfahren ermittelte Formelement FE liegen;
- Ausführung eines Ausgleichsverfahrens (4) für die gleiche Formelementeart mit den ausgefilterten relevanten Koordinatenpunkten Prᵢ zur Berechnung eines endgültigen Formelements.

2. Verfahren nach Anspruch 1, **dadurch gekennzeichnet, dass** vor der Ausführung des Erkennungsverfahrens (2) eine vorgeschaltete Ausgleichsrechnung (6) des gewünschten Formelementes mit allen Eingangskoordinaten (Pᵢ) durchgeführt wird, um die Schritte der Ausführung des Erkennungsverfahrens (2) mit allen Eingangskoordinaten Pᵢ, des Ausfilterns (3) relevanter Koordinatenpunkte Prᵢ und der Ausführung des Ausgleichsverfahrens (4) mit den ausgefilterten Koordinatenpunkten Prᵢ nur dann durchzuführen, wenn ein Gültigkeitsparameter des in der vorgeschalteten Ausgleichsrechnung ermittelten Formelements außerhalb eines vorgebbaren Toleranzbereichs T liegt.

3. Verfahren nach Anspruch 1 oder 2, **dadurch gekennzeichnet, dass** die Erkennung der Lage und Orientierung der gewünschten Formelementeart in den gestörten Eingangskoordinatenpunkten mit Hilfe der Hough-Transformation und der Bestimmung von singulären Punkten im Hough-Parameterraum erfolgt.

4. Verfahren nach einem der Ansprüche 1 bis 3, **dadurch gekennzeichnet, dass** zur Entscheidung ob das in der vorgeschalteten Ausgleichsrechnung (6) berechnete Formelement gültig ist und/oder zur Ausfilterung (3) der relevanten Koordinatenpunkte nach dem Erkennungsverfahren (2) ein mehrdimensionaler Bereich um das gefundene Formelement bestimmt wird, der durch den euklidischen Abstand E zum Formelement charakterisiert ist.

5. Verfahren nach Anspruch 4, **dadurch gekennzeichnet, dass** der euklidische Abstand E anhand eines vorgegebenen Toleranzbereichs T der Formabweichung f des Formelements bestimmt wird.

6. Verfahren nach Anspruch 4, **dadurch gekennzeichnet, dass** der euklidische Abstand E anhand der statistischen Verteilung der Restabweichung von der gewünschten Formelementeart bestimmt wird.

7. Verfahren nach Anspruch 6, **dadurch gekennzeichnet, dass** aus der statistischen Verteilung der Restabweichung von der gewünschten Formelementeart die Standardabweichung s ermittelt wird, die bei der Bestimmung des Abstands E berücksichtigt wird.

8. Verfahren nach einem der Ansprüche 1 bis 7, **dadurch gekennzeichnet, dass** das Erkennungsverfahren (2) die Formelementeart identifiziert.

9. Verfahren nach Anspruch 8, **dadurch gekennzeichnet, dass** das Erkennungsverfahren (2) mehrere gleichartige Formelemente in einem Verarbeitungsschritt bestimmt und das anschließende Ausfiltern (3) der relevanten Koordinatenpunkte sowie die Formelemente-Ausgleichsrechnung (4) auf alle im Erkennungsverfahren (2) gefundenen Formelemente angewendet werden.

## Claims

1. A method for minimizing the influence of disturbing signals in calculating shape elements from input coordinate points Pᵢ, said method comprising the following steps:
- performing a recognition method (2) with all input coordinate points Pᵢ for calculating a recognized shape element FE;
- filtering out (3) relevant coordinate points Prᵢ from the input coordinate points Pᵢ which are located within a predefinable parameter E about the shape element FE determined in the recognition method;
- performing a regression method (4) for the same type of shape element with the filtered-out relevant coordinate points Prᵢ for calculating a final shape element.

2. The method according to claim 1, **characterized in that** the recognition method (2) is preceded by a regression analysis (6) of the desired shape element with all input coordinates (Pᵢ) in order to effect the steps of performing the recognition method (2) with all input coordinates Pᵢ, of performing the filtering-out (3) of relevant coordinate points Prᵢ and of performing the regression method (4) with the filtered-out coordinate points Prᵢ only if a validity parameter of the shape element determined in the preceding regression analysis is outside a predefinable tolerance range T.

3. The method according to claim 1 or 2, **characterized in that** the recognition of the position and orientation of the desired type of shape element within the disturbed input coordinate points is performed by means of the Hough transformation and the determination of the singular points in the Hough parameter space.

4. The method according to one of claims 1 to 3, **characterized in that**, in order to decide whether the shape element calculated in the preceding regression analysis (6) is valid and/or for the purpose of filtering out (3) the relevant coordinate points by means of the recognition method (2), a multidimensional region about the determined shape element is determined, which region is **characterized by** the Euclidean distance E from the shape element.

5. The method according to claim 4, **characterized in that** the Euclidean distance E is determined on the basis of a predetermined tolerance range T of the shape deviation f of the shape element.

6. The method according to claim 4, **characterized in that** the Euclidean distance E is determined on the basis of the statistical-distribution of the residual deviation from the desired type of shape element.

7. The method according to claim 6, **characterized in that** the standard deviation s, which is taken into account in the determination of the distance E, is determined from the statistical distribution of the residual deviation from the desired type of shape element.

8. The method according to one of claims 1 to 7, **characterized in that** the recognition method (2) identifies the type of shape element.

9. The method according to claim 8, **characterized in that** the recognition method (2) determines plural shape elements of the same type in one process step and the subsequent filtering out (3) of the relevant coordinate points and the shape element regression analysis (4) are applied to all shape elements found in the recognition method (2).

## Revendications

1. Procédé pour minimiser l'influence de signaux parasites lors du calcul d'éléments de forme à partir de points de coordonnées d'entrée (Pᵢ) comprenant les étapes suivantes :
- mise en oeuvre d'un procédé de reconnaissance (2) avec tous les points de coordonnées d'entrée (Pᵢ) pour le calcul d'un élément de forme (FE) qui a été reconnu,
- sélection par filtrage (3) de points de coordonnées pertinents (Prᵢ) dans les points de coordonnées d'entrée (Pᵢ) qui, à l'intérieur d'un paramètre (E) pouvant être prédéterminé, se trouvent autour de l'élément de forme (FE) déterminé avec le procédé de reconnaissance, et
- mise en oeuvre pour le calcul d'un élément de forme final, d'un procédé de compensation (4) pour le même genre d'élément de forme avec les points de coordonnées pertinents (Prᵢ) sélectionnés par filtrage.

2. Procédé selon la revendication 1, **caractérisé en ce qu'**avant la mise en oeuvre du procédé de reconnaissance (2) est effectué en amont un calcul de compensation (6) de l'élément de forme souhaité avec toutes les coordonnées d'entrée (Pᵢ), et ceci pour ne réaliser l'étape de la mise en oeuvre du procédé de reconnaissance (2) avec toutes les coordonnées d'entrée (Pᵢ), les étapes de sélection par filtrage (3) de points de coordonnées importants (Prᵢ) et de mise en oeuvre du procédé de compensation (4) avec les points de coordonnées (Prᵢ) sélectionnés par filtrage, uniquement si un paramètre de validité de l'élément moulé déterminé dans le calcul de compensation effectué en amont se trouve en dehors d'une zone de tolérance T pouvant être prédéterminée.

3. Procédé selon la revendication 1 ou 2, **caractérisé en ce que** la reconnaissance de la position et de l'orientation du genre d'élément de forme souhaité dans les points de coordonnées d'entrée perturbés a lieu à l'aide de la transformation de Hough et de la détermination de points singuliers dans la zone des paramètres de Hough.

4. Procédé selon l'une quelconque des revendications 1 à 3, **caractérisé en ce que**, pour décider si l'élément de forme calculé dans le calcul de compensation (6) effectué en amont est valable et/ou pour sélectionner par filtrage (3) les points de coordonnées pertinents après le procédé de reconnaissance (2), on définit un espace pluridimensionnel autour de l'élément de forme trouvé qui est **caractérisé par** la distance euclidienne E par rapport à l'élément de forme.

5. Procédé selon la revendication 4, **caractérisé en ce que** la distance euclidienne E est déterminée sur la base d'une zone de tolérance prédéterminée T de la divergence de forme f de l'élément de forme.

6. Procédé selon la revendication 4, **caractérisé en ce que** la distance euclidienne E est déterminée sur la base de la répartition statistique de la divergence résiduelle par rapport au genre d'élément de forme souhaité.

7. Procédé selon la revendication 6, **caractérisé en ce qu'**à partir de la répartition statistique de la divergence résiduelle par rapport au genre d'élément de forme souhaité est déterminée la divergence standard s qui est prise en compte pour la détermination de la distance E.

8. Procédé selon l'une quelconque des revendications 1 à 7, **caractérisé en ce que** le procédé de reconnaissance (2) identifie le genre d'élément de forme.

9. Procédé selon la revendication 8, **caractérisé en ce que** le procédé de reconnaissance (2) détermine dans une seule étape de traitement plusieurs éléments de forme de même genre et que la sélection par filtrage (3) des points de coordonnées pertinents qui suit, ainsi que le calcul de compensation des éléments de forme (4), sont utilisés pour tous les éléments de forme trouvés avec le procédé de reconnaissance (2).
